# EUROPÄISCHE PATENTSCHRIFT

(11) **EP 3 311 011 B1**
(45) Veröffentlichungstag und Bekanntmachung des Hinweises auf die Patenterteilung: **08.05.2019**
(21) Anmeldenummer: 16727955.3
(22) Anmeldetag: 02.06.2016
(51) Int. Cl.: F01N 3/023

(54) **VERFAHREN ZUR MOBILISIERUNG VON ASCHE IN EINEM ABGASPARTIKELFILTER**
METHOD FOR MOBILISING ASH IN AN EXHAUST-GAS PARTICLE FILTER
PROCÉDÉ DE MOBILISATION DE CENDRES DANS UN FILTRE À PARTICULES DE GAZ D'ÉCHAPPEMENT

(30) Priorität: 16.06.2015 DE 102015007722
(43) Veröffentlichungstag der Anmeldung: 25.04.2018
(73) Patentinhaber: MTU Friedrichshafen GmbH, 88045 Friedrichshafen (DE)
(72) Erfinder: RUSCH, Klaus, 88147 Achberg (DE); LEOPOLD, Raphael-David, 88046 Friedrichshafen (DE); WOLMAN, Hilmar, 88690 Uhldingen-Mühlhofen (DE); ZITZLER, Günter, 88145 Opfenbach (DE); SCHNEIDER, Alexander, 6800 Feldkirch (AT); SPÄDER, Tim, 88085 Langenargen (DE); PROSPERO, Andrea, 88085 Langenargen (DE); MARKERT, Norbert, 88677 Markdorf (DE); NEUSCHELER, Michael, 88046 Friedrichshafen (DE); MANTAJ, Viktor, 88175 Scheidegg, Lindenau (DE); RAUTER, Michael, 88090 Immenstaad a.B. (DE); MALETIC, Boban, 88046 Friedrichshafen (DE); SCHOLZ, John, 88045 Friedrichshafen (DE); CHATTERJEE, Daniel, 88131 Lindau (DE)
(74) Vertreter: Kordel, Mattias
(86) Internationale Anmeldenummer: PCT/EP2016/000903
(87) Internationale Veröffentlichungsnummer: WO 2016/202430

(56) Entgegenhaltungen:
- EP-A2- 1 832 727
- WO-A1-2014/038724
- DE-A1-102013 013 063

## Beschreibung

Die vorliegende Erfindung betrifft ein Verfahren zur Ausführung mit einem Abgaspartikelfilter gemäß dem Oberbegriff von Anspruch 1.

Im Stand der Technik ist es aus der Druckschrift DE 10 2013 013 063 A1 bekannt, im Betrieb anfallende Asche in einem Abgaspartikelfilter von Kanalwänden desselben abzulösen und an das Ende jeweiliger Eingangskanäle des Abgaspartikelfilters zu transportieren, um den aschebedingt zunehmenden Strömungswiderstand über die Betriebszeit gering zu halten. Ermittelt wird hierbei, ob mit Anforderung eines Ascheablösungs- und Transportvorgangs ein Rußmengengrenzwert überschritten ist, wobei für den Fall der Grenzwertüberschreitung sodann ein Rußregenerationsvorgang gestartet wird, um die abzulösende und zu transportierende Asche freizulegen. Nachfolgend wird die Abgasströmungsgeschwindigkeit gesteigert, um die Asche abzulösen und zu transportieren. Dieses Verfahren ist jedoch - insbesondere im Hinblick auf die Effektivität - verbesserungsfähig.

Ausgehend hiervon liegt der vorliegenden Erfindung die Aufgabe zu Grunde, ein verbessertes Verfahren zur Aschebehandlung in einem Abgaspartikelfilter anzugeben.

Diese Aufgabe wird mit mit den Merkmalen des Anspruchs 1 sowie mit einem mit den Merkmalen des Anspruchs gelöst.

Vorteilhafte Weiterbildungen und Ausführungsformen der Erfindung sind in den weiteren Ansprüchen angegeben.

Vorgeschlagen wird erfindungsgemäß ein Verfahren zur Ausführung mit einem Abgaspartikelfilter, insbesondere im Rahmen des Betriebs des Abgaspartikelfilters mit einem Abgasnachbehandlungssystem, vorzugsweise an einem Motor. Im Rahmen der vorliegenden Erfindung ist der Abgaspartikelfilter insbesondere ein wanddurchströmter Filter, weiterhin insbesondere jener Bauart, im Rahmen derer der Abgaspartikelfilter parallele, wechselweise an gegenüberliegenden Enden versperrte Eingangs- und Ausgangskanäle aufweist, wobei die Kanäle durch poröse Kanal- bzw. Filterwände getrennt sind.

Ein im Rahmen der Erfindung vorgesehener Abgaspartikelfilter bzw. ein den Abgaspartikelfilter aufweisendes Abgasnachbehandlungssystem ist weiterhin bevorzugt je für einen Motor bzw. eine Brennkraftmaschine der Dieselbauart (Selbstzünder) bzw. eine Diesel-Brennkraftmaschine vorgesehen, insbesondere für einen Großmotor. Insoweit ist ein Abgaspartikelfilter nach der vorliegenden Erfindung bevorzugt als (Diesel-)Partikelfilter (DPF) bereitgestellt.

Ein Motor, mit welchem Abgaspartikelfilter und Abgasnachbehandlungssystem im Rahmen der Erfindung betrieben werden, kann zum Beispiel für ein Kraftfahrzeug wie etwa ein Schiff, eine Lok oder ein Nutzfahrzeug, oder auch für eine stationäre Einrichtung vorgesehen sein, z.B. für ein Blockheizkraftwerk, ein (Not-)Stromaggregat oder auch für Industrieanwendungen. Im Rahmen der vorliegenden Erfindung kann der Motor bzw. die Brennkraftmaschine neben oder alternativ zu der Verwendung mit Dieselkraftstoff z.B. auch für die Verwendung mit Schweröl oder Bioöl vorgesehen sein.

Der Abgaspartikelfilter weist erfindungsgemäß eine Filterwand auf, entlang welcher Abgas zur Filterung (von Partikeln; insbesondere Ruß und Asche) entlang geführt wird, bevorzugt gebildet durch die Wand wenigstens eines Filterkanals. Bei besonders bevorzugten Ausgestaltungen ist die Filterwand eine Filterwand eines Eingangskanals, insbesondere eines wie vorstehend erörterten wanddurchströmten Filters. Im Rahmen der Erfindung ist die Filterwand bevorzugt als porige bzw. poröse Filterwand bereitgestellt.

In die Erfindung kennzeichnender Weise umfasst das vorgeschlagene Verfahren, einhergehend mit dem Vorteil einer verbesserten Aschebehandlung, nunmehr eine (Abgaspartikelfilter-) Regenerationsphase, bei welcher in einem ersten Schritt a) die Einstellung einer Rußbeladung am Abgaspartikelfilter erfolgt, wobei die eingestellte Rußbeladung eine Bildung einer Rußschicht auf an der Filterwand abgelagerter Asche bewirkt. Mit anderen Worten ist vorgesehen, im ersten Schritt der erfindungsgemäßen Regenerationsphase - gezielt bzw. aktiv - eine Rußschicht auf jener Asche anzulagern, welche während des Normalbetriebes an der Filterwand bzw. Kanalwand abgelagert wird.

Die Einstellung der Rußbeladung des Abgaspartikelfilters in Schritt a) wird durch kurzzeitige Erhöhung der Rußkonzentration im Abgas bewirkt, im Rahmen des Betriebs des Abgasnachbehandlungssystem mit Abgaspartikelfilter an einem Motor, insbesondere durch kurzzeitige Veränderung von Motorparametern, zum Beispiel durch Veränderung von Einspritzmenge, Einspritzdruck, Einspritzzeitpunkt, Ansaugluftmasse, AGR-Rate oder Ventilsteuerzeiten.

In einem zweiten Schritt b) der Regenerationsphase des erfindungsgemäßen Verfahrens wird nunmehr die abgelagerter Asche durch Abbrand der gebildeten Rußschicht im Rahmen einer aktiven Regeneration des Abgaspartikelfilters mobilisiert. Die Begrifflichkeit aktive Regeneration ist hierbei im herkömmlichen Sinne zu verstehen, nämlich dahingehend, dass die Rußbeladung im Rahmen der aktiven Regeneration durch Oxidation der Rußpartikel mit Sauerstoff vermindert wird, wobei die Rußpartikel im Partikelfilter insbesondere in CO₂ umgesetzt werden.

Das erfindungsgemäße Verfahren sieht mit anderen Worten vor, einhergehend mit einer - jeweiligen - aktiven Regeneration und derselben zeitlich vorausgehend, gezielt eine Rußschicht auf der abgelagerten Asche an der Filterwand aufzubringen, i.e. im Rahmen eines kombinierten Ereignisses bzw. der erfindungsgemäßen Regenerationsphase mit den Schritten a) und b). Einher geht damit der maßgebliche Vorteil, eine verbesserte Mobilisierung der Asche während der aktiven Regeneration zu erzielen, wie dies erfinderseitig überraschend erkannt wurde. Im Rahmen der Mobilisierung wird die Asche von der Filterwand abgelöst und strömungsmäßig mitgenommen bzw. abtransportiert, wobei die zuvor in Schritt a) eingestellte Rußbeladung und die daraus resultierende Rußschicht offenbar dafür sorgen, dass die nunmehr rußbelegte Asche im Rahmen des Abbrands in Schritt b) vorteilhaft "mitgerissen" wird, d.h. mobilisiert wird. In der Folge kann insbesondere mit einem wanddurchströmten Abgaspartikelfilter der eingangs erörterten Art eine dichte Aschepackung am Ende eines jeweiligen (Eingangs-)Filterkanals erzielt werden, mithin die Zunahme des Strömungswiderstands über die Betriebsdauer gering gehalten werden. Erkannt wurde in diesem Zusammenhang insoweit auch, dass ein Freilegen der Asche wie im Stand der Technik vor deren Ablösung und Transport eher nachteilig ist.

Im Rahmen des erfindungsgemäßen Verfahrens kann hierbei vorgesehen sein, dass Schritt a) und Schritt b) im Rahmen der erfindungsgemäßen Regenerationsphase zeitlich unmittelbar bzw. direkt aufeinander folgen, i.e. unterbrechungsfrei. Denkbar ist jedoch auch, dass im Rahmen der Regenerationsphase die mit Schritt a) eingestellte Rußbeladung zwischen Schritt a) und b) über eine Dauer auf einem vorbestimmten Wert gehalten wird. Dabei kann beispielsweise durch geeignetes Thermomanagement (den Abgaspartikelfilter betreffend) ein Gleichgewicht zwischen Rußeintrag und Rußabbrand über die Dauer gehalten werden, d.h. bis zur Einleitung von Schritt b). Ein solches Verfahren, bei welchem ein konstanter Wert der Rußbeladung über eine Phase bzw. Dauer eingehalten wird, kann vorteilhaft ausgeführt werden, wenn noch zugewartet werden soll, bis verbesserte oder bestmögliche Betriebsbedingungen für eine aktive Regeneration vorherrschen, insbesondere im Hinblick auf Strömungsbedingungen und weiterhin insbesondere für eine möglichst dichte Aschepackung.

Die Regenerationsphase kann im Rahmen des Verfahrens eingeleitet werden, d.h. mit Schritt a), sobald ein mit Bezug auf den Abgaspartikelfilter beladungsabhängiger Schwellwert erreicht ist (wobei die Beladung (Asche / Ruß) z.B. durch Messung und/oder Rechnung ermittelt sein kann). Alternativ kann zum Beispiel auch eine Einleitung der Regenerationsphase vorgesehen sein, welcher das Verstreichen einer vorbestimmten Zeitdauer, zum Beispiel Betriebsdauer, zur Triggerung zu Grunde liegt. Die aktive Regeneration in Schritt b) kann beginnen, falls ein vorbestimmtes Asche-Ruß-Verhältnis oder eine vorbestimmte Rußmenge im Rahmen der Einstellung der Rußbeladung (Aufrußen) mit Schritt a) erreicht ist.

Bevorzugt wird eine minimal nötige Rußbeladung für die beabsichtigte Aschemobilisierung mit dem Verfahren eingestellt, um den mittleren Druckverlust über den Abgaspartikelfilter zu minimieren. Ziel ist es hierbei insbesondere, die Rußbeladung dahingehend zu optimieren, dass einerseits hinreichend Ruß vor der aktiven Regeneration vorhanden ist (z.B. um bei einem Wandstromfilter die beabsichtigte, dichte Aschepackung zu realisieren), und andererseits die Rußbeladung während der sonstigen Betriebszeit gering gehalten werden kann (um den Druckverlust über den Abgaspartikelfilter zu minimieren).

Mit dem vorgeschlagenen Verfahren ist es weiterhin vorgesehen, die Rußbeladung in Schritt a) unter Berücksichtigung jener Strömungsbedingungen im Abgaspartikelfilter einzustellen, wie diese in Schritt b) während der aktiven Regeneration im Abgaspartikelfilter zu erwarten und/oder einzustellen sind. Insbesondere als auch diese Strömungsverhältnisse auf die Ascheumlagerung direkten Einfluss haben und mit der Erfindung - über das bisher Bekannte hinaus - beobachtet werden konnte, dass die zum Ablösen der Asche von der Filter- bzw. Kanalwand erforderliche Rußmenge und die Strömungsgeschwindigkeit während der aktiven Regeneration voneinander abhängen, ist es somit möglich, die Rußmenge in Schritt a) bedarfsgerecht bzw. präzise einzustellen.

Im Rahmen einer Einstellung in Schritt a), welche die Strömungsverhältnisse gemäß Schritt b) berücksichtigt, werden bevorzugt Werte herangezogen, welche sowohl über den ganzen Abgaspartikelfilter ermittelt werden als auch lokal. Zum Beispiel wird die in axialer Richtung veränderliche Strömungsgeschwindigkeit und/oder die lokale Rußkonzentration berücksichtigt. Im Rahmen der Absolvierung der erfindungsgemäßen Regenerationsphase oder auch für deren Initialisierung kann insbesondere auch das effektive Filtervolumen berücksichtigt werden, welches sich über die Laufzeit des Abgaspartikelfilters ändert.

In Weiterbildung des vorgeschlagenen Verfahrens kann vorteilhaft ein dritter Schritt c) vorgesehen sein, welcher der aktiven Regeneration in Schritt b) insbesondere unmittelbar nachfolgt. Mit Schritt c) wird hierbei die Rußbeladung zum (erneuten) Aufbringen einer Rußschicht an der Filterwand - kurzzeitig - erhöht. Bewirkt werden kann hiermit, dass sich die Abscheideeffizienz des Abgaspartikelfilters (bezüglich der Partikelanzahl) nach der aktiven Regeneration in Schritt b) schnell maximieren lässt, wobei mit Schritt c) verhindert wird, dass sich Asche in Poren des Abgapartikelfilters einlagert und diese zusetzt. Ebenso kann hiermit eine geringe Rußschicht unter nachfolgende Ascheablagerungen aufgebracht werden, das heißt im Sinne einer gezielten Schichtung. In der Folge kann hieraus resultieren, dass Asche mit dem erfindungsgemäßen Verfahren, zum Beispiel im Rahmen einer erneuten Ausführung der Regenerationsphase, noch leichter zu mobilisieren ist.

Im Rahmen der Erfindung wird auch eine Anordnung mit einem Motor sowie einem dem Motor zugeordneten Abgasnachbehandlungssystem, welches den Abgaspartikelfilter aufweist, vorgeschlagen, wobei die Anordnung zur Durchführung des wie vorstehend erörterten Verfahrens eingerichtet ist. Zum Beispiel und bevorzugt kann die Anordnung eingerichtet sein, das Verfahren im Rahmen der Interaktion eines Motorreglers, eines Abgasnachbehandlungsreglers und einer übergeordneten Steuerung bzw. Kontrolleinheit durchzuführen, insbesondere in Verbindung mit einer geeigneten Sensorik des Abgasnachbehandlungssystems.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Einzelne Merkmale können je einzeln für sich oder zu mehreren in verschiedener Kombination bei einer Variante der Erfindung verwirklicht sein.

Bevorzugte Ausführungsformen der Erfindung werden nachfolgend anhand der beigefügten Zeichnungen näher erläutert. Es zeigen:

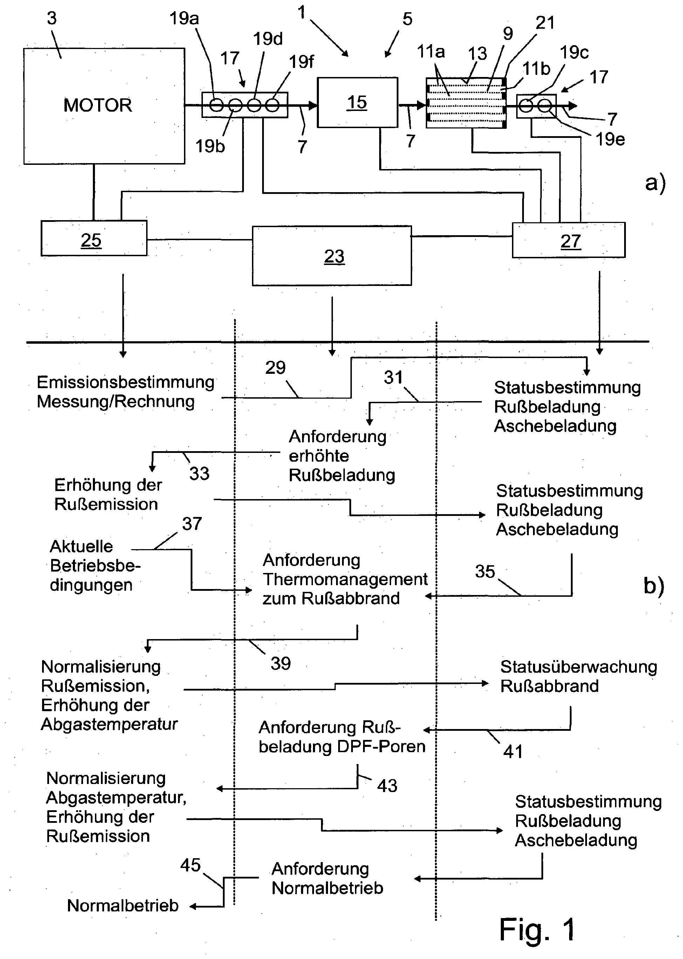

- Fig. 1: exemplarisch und schematisch in Teil a) eine Anordnung zur Ausführung des erfindungsgemäßen Verfahrens sowie in Teil b) ein Ablaufdiagramm eine mögliche Ausgestaltung des Verfahrens gemäß der Erfindung näher veranschaulichend.

In der nachfolgenden Beschreibung und den Zeichnungen entsprechen gleichen Bezugszeichen Elemente gleicher oder vergleichbarer Funktion.

Fig. 1, Teil a), zeigt exemplarisch und schematisch eine Anordnung 1 aufweisend einen Motor 3, insbesondere (Groß-)Dieselmotor, sowie ein Abgasnachbehandlungssystem 5, welches bereitgestellt ist, Abgase des Motors 3 zu reinigen, insbesondere um Emissionsvorgaben regelmäßig und zuverlässig zu erfüllen.

Das Abgasnachbehandlungssystem 5 umfasst einen Abgasstrang 7, welchem einlassseitig die Abgase des Motors 3 zugeführt werden und welcher auslassseitig zum Beispiel an die Umwelt ausmündet. Im Abgasstrang 7 angeordnet und insoweit vom Abgas durchströmbar ist ein Abgaspartikelfilter 9 des Abgasnachbehandlungssystems 5, welcher als (Diesel-)Partikelfilter (DPF) bereitgestellt ist. Der Abgaspartikelfilter 9 ist als Wandstromfilter bzw. als wanddurchströmbarer Filter bereitgestellt und mit einer Vielzahl sich parallel zueinander erstreckender Kanäle 11a, b , i.e. Einlasskanäle 11a und Auslasskanäle 11b, gebildet.

Die Eingangskanäle 11a stellen hierbei je eine Filterwand 13 bzw. Kanalwand bereit, welche porig bzw. porös gebildet ist, und entlang welcher das Abgas zur Filterung entlang geführt wird. Endseitig ist der jeweilige Einlasskanal 11a in Abgas-Strömungsrichtung betrachtet verschlossen (die Ausgestaltung und Wirkungsweise eines solchen Filters ist zum Beispiel der Druckschrift DE 10 2013 013 063 A1, s. insbesondere auch Fig. 2, zu entnehmen, so dass hierauf nicht weiter eingegangen wird).

Wie Fig. 1 weiter veranschaulicht, kann das Abgasnachbehandlungssystem 5 neben dem Abgaspartikelfilter 9 wenigstens eine weitere Abgasbehandlungsstufe 15 aufweisen, insbesondere einen (Diesel-)Oxidationskatalysator (DOC), z.B. dem Abgaspartikelfilter 9 vorgeordnet. Einem Oxidationskatalysator kommt z.B. die Aufgabe zu, die Abgastemperatur bedarfsgerecht zu erhöhen, zum Beispiel für eine aktive Regeneration am Abgaspartikelfilter 9, im Rahmen derer ein Rußabbrand erfolgt.

Das Abgasnachbehandlungssystem 5 kann zur Erfassung von abgasrelevanten Messgrößen weiterhin eine Sensorik 17 mit wenigstens einem Sensor 19a, b, c, ... aufweisen. Die Sensorik 17 kann zur Messung eines Sauerstoffgehalts im Abgas zum Beispiel eine Lambdasonde 19a aufweisen, weiterhin zum Beispiel wenigstens einen Temperatursensor 19b, c zur Erfassung der Abgastemperatur, bevorzugt je dem Abgaspartikelfilter 9 vorgeordnet, Bz. 19b, und nachgeordnet, Bz. 19c, weiterhin wenigstens einen Drucksensor 19d,e, bevorzugt je dem Abgaspartikelfilter 9 vorgeordnet, Bz. 19d, und nachgeordnet, Bz. 19e, wobei mit den Drucksensoren 19d,e z.B. ein Differenzdruck ermittelbar ist, insbesondere um darauf basierend einen aktuellen Strömungswiderstand am DPF 9 zu ermitteln. Weiterhin kann die Sensorik 17 zum Beispiel einen NOx-Sensor 19f umfassen. Denkbar ist jedoch, eine oder mehrere der obigen, sensorbasierten Messgrößen durch modellbasierte oder rechnerisch ermittelte Werte zu substituieren.

Im Rahmen des geschilderten Abgasnachbehandlungssystems 5 fällt mit dessen Betrieb neben (Diesel-)Ruß regelmäßig Asche im Abgaspartikelfilter 9 an, welche sich an einer jeweiligen Filterwand 13 bzw. Kanalwand anlagert, mithin den Strömungsdruckverlust durch Zusetzen der Filterporen erhöht. Ohne geeignete Gegenmaßnahmen würde somit der Gegendruck des Filters rasch ansteigen. Um dem entgegenzuwirken wird es auf an sich bekannte Weise angestrebt, die Asche am Ende der Eingangskanäle 11a anzulagern, d.h. eine dichte Aschepackung (Stopfenasche) am Kanalende 21 zu bilden. Zu diesem Zweck ist die an der Filterwand 13 angelagerte Asche zu lösen und zum Kanalende 21 zu transportieren.

Nachfolgend wird anhand von Fig. 1, insbesondere anhand von Teil b), detaillierter auf eine mögliche Ausgestaltung des erfindungsgemäßen Verfahrens eingegangen, insbesondere in Verbindung mit der Anordnung 1 nach Fig. 1, Teil a).

Zur Ausführung des Verfahrens kann die Anordnung 1 bevorzugt eine übergeordnete Steuerung bzw. Kontrolleinheit 23 aufweisen, welche die Ausführung des Verfahrens steuert, vorzugsweise mittels implementiertem, geeigneten Programmcode. Daneben weist die Anordnung 1 bevorzugt einen Motorregler 25 und einen Abgasnachbehandlungsregler (AGN-Regler) 27 auf, welche je mit der übergeordneten Steuerung 23 zur Durchführung des Verfahrens zusammenwirken. Sowohl der Motorregler 25 als auch der Abgasnachbehandlungsregler 27 können hierbei mit der Sensorik 17 geeignet wirkverbunden sein, weiterhin mit dem Motor 3 bzw. den Behandlungsstufen 9, 15 im Abgasnachbehandlungssystem 5.

Im Vorgriff auf eine Durchführung des Verfahrens, z.B. im Normalbetrieb, kann der sensorikunterstützte AGN-Regler 27 - bevorzugt unter Einbezug seitens des Motorreglers 25 gelieferter Emissionsinformation 29 - kontinuierlich den Status des Abgaspartikelfilters 9 in Hinblick auf dessen Beladungssituation (Asche / Ruß) abfragen bzw. bestimmen. In der Folge geht der übergeordneten Steuerung 23 eine diesbezügliche Statusinformation 31 seitens des AGN-Reglers 27 zu. Erkennt die übergeordnete Steuerung 23 darauf basierend das Erreichen eines vorbestimmten Beladungsschwellwerts, welcher zum Beispiel rechnerisch unterstützt ermittelt ist, zum Beispiel unter Berücksichtigung eines effektiven Filtervolumens, leitet die übergeordnete Steuerung 23 die erfindungsgemäße Regenerationsphase des Abgaspartikelfilters 9 ein.

In einem ersten Schritt a) der Regenerationsphase wird dabei zunächst eine Rußbeladung am Abgaspartikelfilter 9 eingestellt, welche eine Bildung einer Rußschicht auf an der Filterwand 13 abgelagerter Asche bewirkt, d.h. im Rahmen der Einstellung der Rußbeladung mit Schritt a) wird die Rußkonzentration im Abgas - insbesondere kurzzeitig - erhöht.

Wie Fig. 1, Teil b), zeigt, instruiert die übergeordnete Steuerung 23 hierzu den Motorregler 25 zur Erhöhung der Rußemission, Bz. 33, welcher daraufhin Motor(betriebs)parameter kurzzeitig verändert. Geändert werden beispielsweise die Einspritzmenge, ein Einspritzdruck, ein Einspritzzeitpunkt, die Ansaugluftmasse, die AGR-Rate (Abgasrückführungsrate) oder Ventilsteuerzeiten, so dass die Rußemission seitens des Motors 3 und somit die Rußkonzentration im Abgas zunimmt.

Erkennt die übergeordnete Steuerung 23 aufgrund der seitens des AGN-Reglers 27 bzw. dessen Statusüberwachung gelieferten Statusinformation, Bz. 35, in der Folge, dass mit der nunmehr gemäß Schritt a) erfolgten erhöhten Rußbeladung (Aufrußen) ein vorbestimmter Zielwert erreicht ist, das heißt die vorgesehene Rußbeladung eingestellt ist, wird die abgelagerte Asche verfahrensgemäß in einem Schritt b) nachfolgend mobilisiert, das heißt durch Abbrand der gebildeten Rußschicht im Rahmen einer aktiven Regeneration des Abgaspartikelfilters 9.

Zur Einleitung von Schritt b) werden bevorzugt aktuelle Betriebsbedingungen, Bz. 37, durch die übergeordnete Steuerung 23 ausgewertet, insbesondere auch mit dem Ziel, den Zeitpunkt des Rußabbrands derart zu steuern, dass eine möglichst dichte Aschepackung erzielbar ist, zum Beispiel aufgrund vorteilhaft hoher Strömungsgeschwindigkeiten. Zu diesem Zweck kann vorgesehen sein, die eingestellte Rußbeladung bis zum Erreichen eines günstigen Auslösezeitpunkts für Schritt b) konstant zu halten, zum Beispiel im Rahmen eines wie einleitend geschilderten geeigneten Thermomanagements.

Mit Erkennen eines geeigneten Auslösezeitpunkts für Schritt b) fordert die übergeordnete Steuerung 23 im Rahmen des Thermomanangements den Motorregler 25 auf, die Rußemission zu reduzieren und die Abgastemperatur für den Rußabbrand im Rahmen der aktiven Regeneration des Abgaspartikelfilters 9 gemäß Schritt b) weiterhin zu erhöhen (ggf. unter Einbezug des DOC), Bz. 39.

Schritt b) wird beendet, sobald aufgrund der Statusüberwachung, Bz. 41, durch den AGN-Regler 27 von der übergeordneten Steuerung 23 erkannt wird, dass der Rußabbrand in beabsichtigter Weise erfolgt ist, mithin die an der Filterwand 13 angelagerte Asche mit Abbrennen des Rußes mobilisiert und an das Ende 21 der Eingangskanäle 11a transportiert wurde.

Gemäß einer bevorzugten Ausgestaltung des Verfahrens wird Schritt b) nachfolgend nunmehr - in einem Schritt c) - erneut eine Rußbeladung seitens der übergeordneten Steuerung 23 angefordert, Bz. 43, im Rahmen derer der Motoregler 25 die Abgastemperatur normalisiert, insbesondere jedoch die Steigerung der Rußemission bewirkt. Mit der erneut gesteigerten Rußbeladung wird der aktiven Regeneration in Schritt b) unmittelbar nachfolgend vorteilhaft eine dünne Rußschicht auf der nunmehr regenerierten Filterwand 13 angelagert, d.h. vorbestimmter Stärke, welche vorteilhaft verhindert, dass nachfolgend eingetragene Asche die Filterporen zu verstopfen vermag.

Nach erkanntem Erreichen eines Sollwerts dieser Rußbeladung fordert die übergeordnete Steuerung sodann z.B. den Normalbetrieb an, Bz. 45, welcher darauf basierend seitens des Motorreglers 25 eingestellt werden kann.

## Patentansprüche

1. Verfahren zur Ausführung mit einem Abgaspartikelfilter (9), welcher mit einem Abgasnachbehandlungssystem (5) betrieben wird, wobei der Abgaspartikelfilter (9) eine Filterwand (13) aufweist, entlang welcher Abgas zur Filterung geführt wird;
**dadurch gekennzeichnet, dass**
- das Verfahren eine Regenerationsphase umfasst mit den Schritten:
a) Einstellung einer vorbestimmten Rußbeladung am Abgaspartikelfilter (9) durch Erhöhung der Rußkonzentration im Abgas, wobei die eingestellte Rußbeladung eine Bildung einer Rußschicht auf an der Filterwand (13) abgelagerter Asche bewirkt; und
b) nachfolgende Mobilisierung der nunmehr rußbelegten, abgelagerten Asche durch Abbrand der gebildeten Rußschicht im Rahmen einer aktiven Regeneration des Abgaspartikelfilters (9).

2. Verfahren nach Anspruch 1,
**dadurch gekennzeichnet, dass**
- Schritt a) und b) im Rahmen der Regenerationsphase zeitlich unmittelbar aufeinander folgen; oder
- die eingestellte Rußbeladung zwischen Schritt a) und b) über eine Dauer auf einem vorbestimmten Wert gehalten wird.

3. Verfahren nach einem der vorhergehenden Ansprüche,
**dadurch gekennzeichnet, dass**
- die Regenerationsphase mit Schritt a) eingeleitet wird, sobald ein mit Bezug auf den Abgaspartikelfilter (9) beladungsabhängiger Schwellwert erreicht ist; und/oder
- bei einer Einleitung der Regenerationsphase mit Schritt a) ein effektives Filtervolumen des Abgaspartikelfilters (9) berücksichtigt wird.

4. Verfahren nach einem der vorhergehenden Ansprüche,
**dadurch gekennzeichnet, dass**
- in einem Schritt c), welcher der aktiven Regeneration in Schritt b) unmittelbar nachfolgt, die Rußbeladung zum Aufbringen einer Rußschicht an der Filterwand (13) erhöht wird.

5. Verfahren nach einem der vorhergehenden Ansprüche,
**dadurch gekennzeichnet, dass**
- die aktive Regeneration in Schritt b) beginnt, falls ein vorbestimmtes Asche-Ruß-Verhältnis oder eine vorbestimmte Rußmenge mit Schritt a) erreicht ist.

6. Verfahren nach einem der vorhergehenden Ansprüche,
**dadurch gekennzeichnet, dass**
- bei der Einstellung der Rußbeladung in Schritt a) Strömungsbedingungen berücksichtigt werden, welche während der aktiven Regeneration in Schritt b) am Abgaspartikelfilter (9) zu erwarten oder einzustellen sind.

7. Verfahren nach einem der vorhergehenden Ansprüche,
**dadurch gekennzeichnet, dass**
- mit der Verlagerung der Asche mit Schritt b) eine dichte Aschepackung im Abgaspartikelfilter (9) erzielt wird.

8. Verfahren nach einem der vorhergehenden Ansprüche,
**dadurch gekennzeichnet, dass**
- das Verfahren weiterhin in Verbindung mit einem Motor (3) sowie einem diesem zugeordneten Abgasnachbehandlungssystem (5) durchgeführt wird, wobei die Rußbeladung in Schritt a) durch kurzzeitige Veränderung von Motorparametern eingestellt wird.

9. Anordnung (1) mit einem Motor (3) sowie einem dem Motor (3) zugeordneten Abgasnachbehandlungssystem (5), welches einen Abgaspartikelfilter (9) aufweist, **dadurch gekennzeichnet, dass**
- die Anordnung (1) Mittel umfasst, die zur Durchführung aller Verfahrensschritte des Verfahrens nach einem der vorhergehenden Ansprüche eingerichtet sind.

10. Anordnung (1) nach Anspruch 9,
**dadurch gekennzeichnet, dass**
- die Anordnung (1) eingerichtet ist, das Verfahren im Rahmen der Interaktion eines Motorreglers (25), eines Abgasnachbehandlungsreglers (27) und einer übergeordneten Steuerung (23) durchzuführen.

## Claims

1. Method to be performed with an exhaust particulate filter (9) which is operated with an exhaust gas aftertreatment system (5), wherein the exhaust particulate filter (9) comprises a filter wall (13), along which exhaust gas is led for filtering, **characterized in that**
- the method comprises a regeneration phase having the following steps:
a) setting of a predefined soot load on the exhaust particulate filter (9) by increasing the soot concentration in the exhaust gas, wherein the set soot load gives rise to the formation of a layer of soot on top of ash deposited on the filter wall (13); and
b) subsequent mobilization of the now soot-coated, deposited ash by burning off the formed layer of soot in the course of an active regeneration of the exhaust particulate filter (9).

2. Method according to Claim 1,
**characterized in that**
- step a) and step b) immediately follow one another in the course of the regeneration phase; or
- the set soot load is maintained at a predefined value over a period between step a) and step b).

3. Method according to one of the preceding claims,
**characterized in that**
- the regeneration phase is initiated with step a), as soon as a threshold value that varies as a function of the load on the exhaust particulate filter (9) is reached; and/or
- when initiating the regeneration phase with step a) account is taken of an effective filter volume of the exhaust particulate filter(9).

4. Method according to one of the preceding claims,
**characterized in that**
in a step c), which immediately follows the active regeneration in step b), the soot load is increased in order to apply a layer of soot to the filter wall (13).

5. Method according to one of the preceding claims,
**characterized in that**
- the active regeneration in step b) commences if a predefined ash-soot ratio or a predefined quantity of soot is reached by step a).

6. Method according to one of the preceding claims,
**characterized in that**
- in setting the soot load in step a) account is taken of flow conditions which are to be anticipated or set on the exhaust particulate filter (9) during the active regeneration in step b) .

7. Method according to one of the preceding claims,
**characterized in that**
- a dense ash packing is obtained in the exhaust particulate filter (9) by the displacement of ash in step b).

8. Method according to one of the preceding claims,
**characterized in that**
- the method is furthermore performed in connection with an engine (3) and an exhaust gas aftertreatment system (5) associated therewith, wherein the soot load is set in step a) by briefly varying engine parameters.

9. Arrangement (1) having a motor (3) and an exhaust gas aftertreatment system (5), which is associated with the engine (3) and which comprises an exhaust particulate filter (9),
**characterized in that**
- the arrangement (1) comprises means which are adapted to perform all the method steps of the method according to one of the preceding claims.

10. Arrangement (1) according to Claim 9,
**characterized in that**
the arrangement (1) is adapted to perform the method as part of the interaction between an engine control module (25), an exhaust gas aftertreatment control module (27) and an overriding control (23).

## Revendications

1. Procédé à mettre en oeuvre avec un filtre à particules de gaz d'échappement (9), lequel fonctionne avec un système de post-traitement des gaz d'échappement (5), le filtre à particules de gaz d'échappement (9) possédant une paroi de filtre (13) le long de laquelle sont guidés les gaz d'échappement en vue du filtrage ;
**caractérisé en ce que**
- le procédé comprend une phase de régénération avec les étapes suivantes :
a) réglage d'une charge en suie prédéterminée au niveau du filtre à particules de gaz d'échappement (9) par augmentation de la concentration de suie dans les gaz d'échappement, la charge en suie réglée provoquant une formation d'une couche de suie sur la cendre déposée sur la paroi de filtre (13) ; et
b) ensuite mobilisation de la cendre déposée, à présent garnie de suie, par combustion de la couche de suie formée dans le cadre d'une régénération active du filtre à particules de gaz d'échappement (9).

2. Procédé selon la revendication 1,
**caractérisé en ce que**
- les étapes a) et b) se suivent directement l'une l'autre dans le temps dans le cadre de la phase de régénération ; et
- la charge en suie réglée est maintenue à une valeur prédéterminée entre les étapes a) et b) pendant une durée donnée.

3. Procédé selon l'une des revendications précédentes,
**caractérisé en ce que**
- la phase de régénération est initiée avec l'étape a) dès qu'une valeur de seuil dépendante de la charge en rapport avec le filtre à particules de gaz d'échappement (9) est atteinte ; et/ou
- un volume de filtre effectif du filtre à particules de gaz d'échappement (9) est pris en compte lors d'une initiation de la phase de régénération avec l'étape a).

4. Procédé selon l'une des revendications précédentes,
**caractérisé en ce que**
- dans une étape c), qui suit immédiatement la régénération active à l'étape b), la charge en suie est augmentée en vue d'appliquer une couche de suie sur la paroi de filtre (13).

5. Procédé selon l'une des revendications précédentes,
**caractérisé en ce que**
- la régénération active à l'étape b) commence dans le cas où un rapport cendre/suie prédéterminé ou une quantité de suie prédéterminée est atteint(e) à l'étape a) .

6. Procédé selon l'une des revendications précédentes,
**caractérisé en ce que**
- lors du réglage de la charge en suie à l'étape a), les conditions d'écoulement qui sont à attendre ou à régler au niveau du filtre à particules de gaz d'échappement (9) pendant la régénération active à l'étape b) sont prises en compte.

7. Procédé selon l'une des revendications précédentes,
**caractérisé en ce que**
- un tassement dense des cendres dans le filtre à particules de gaz d'échappement (9) est obtenu avec le déplacement des cendres à l'étape b).

8. Procédé selon l'une des revendications précédentes,
**caractérisé en ce que**
- le procédé est en outre mis en oeuvre en association avec un moteur (3) ainsi qu'un système de post-traitement des gaz d'échappement (5) associé à celui-ci, la charge en suie à l'étape a) étant réglée par une modification de courte durée des paramètres du moteur.

9. Arrangement (1) comprenant un moteur (3) ainsi qu'un système de post-traitement des gaz d'échappement (5) associé au moteur (3), lequel possède un filtre à particules de gaz d'échappement (9),
**caractérisé en ce que**
- l'arrangement (1) comporte des moyens qui sont conçus pour exécuter toutes les étapes du procédé selon l'une des revendications précédentes.

10. Arrangement (1) selon la revendication 9, **caractérisé en ce que**
- l'arrangement (1) est conçu pour mettre en oeuvre le procédé dans le cadre de l'interaction d'un régulateur de moteur (25), d'un régulateur de post-traitement des gaz d'échappement (27) et d'une commande de supervision (23).
